# EUROPÄISCHE PATENTSCHRIFT

(11) **EP 1 992 063 B1**
(45) Veröffentlichungstag und Bekanntmachung des Hinweises auf die Patenterteilung: **12.10.2011**
(21) Anmeldenummer: 07726230.1
(22) Anmeldetag: 25.01.2007
(51) Int. Cl.: H02P 3/22, B60L 7/02

(54) **DIESELELEKTRISCHES ANTRIEBSSYSTEM MIT EINEM PERMANENT ERREGTEN SYNCHRONGENERATOR**
DIESEL-ELECTRIC DRIVE SYSTEM COMPRISING A PERMANENTLY EXCITED SYNCHRONOUS GENERATOR
SYSTÈME D'ENTRAÎNEMENT DIESEL/ÉLECTRIQUE COMPRENANT UN GÉNÉRATEUR SYNCHRONE À EXCITATION PERMANENTE

(30) Priorität: 07.03.2006 DE 102006010537
(43) Veröffentlichungstag der Anmeldung: 19.11.2008
(73) Patentinhaber: SIEMENS AKTIENGESELLSCHAFT, 80333 München (DE)
(72) Erfinder: FUCHS, Andreas, 91056 Erlangen (DE); KÖRNER, Olaf, 90461 Nürnberg (DE)
(86) Internationale Anmeldenummer: PCT/EP2007/050729
(87) Internationale Veröffentlichungsnummer: WO 2007/101745

(56) Entgegenhaltungen:
- DE-A1- 10 210 164
- JP-A- 59 230 477
- KOERNER O ET AL: "Energy Efficient Drive System for a Diesel Electric Shunting Locomotive" POWER ELECTRONICS AND APPLICATIONS, 2005 EUROPEAN CONFERENCE ON DRESDEN, GERMANY 11-14 SEPT. 2005, PISCATAWAY, NJ, USA,IEEE, 11. September 2005 (2005-09-11), Seiten P1-P10, XP010933721 ISBN: 90-75815-09-3 in der Anmeldung erwähnt

## Beschreibung

Die Erfindung bezieht sich auf ein dieselelektrisches Antriebssystem gemäß Oberbegriff des Anspruchs 1.

Ein gattungsgemäßes Antriebssystem ist der Veröffentlichung mit dem Titel "Energy Efficient Drive System for a Diesel Electric Shunting Locomotive", von Olaf Koerner, Jens Brand und Karsten Rechenberg, abgedruckt im Konferenzband "EPE'2005", der EPE-Konferenz in Dresden vom 11.-14.09.2005 zu entnehmen. In dieser Veröffentlichung werden zwei dieselelektrische Antriebssysteme mit einem permanent erregten Synchrongenerator einander gegenüber gestellt. Diese beiden Antriebssysteme unterscheiden sich nur darin, dass der generatorseitige Stromrichter des Spannungszwischenkreis-Umrichters einmal ein Diodengleichrichter und das andere Mal ein selbstgeführter Pulsstromrichter ist. In dieser Veröffentlichung wird der selbstgeführte Pulsstromrichter als IGBT-Gleichrichter bezeichnet. Bei beiden Antriebssystemen ist ein Bremswiderstand mit dem Zwischenkreis des Spannungszwischenkreis-Umrichters verbindbar. Dazu ist ein abschaltbarer Thyristor vorgesehen, der auch als Gate Turn Off-Thyristor (GTO-Thyristor) bezeichnet wird. Mittels diesem Pulswiderstand wird die Gleichspannung im Zwischenkreis des Spannungszwischenkreis-Umrichters im Bremsbetrieb, das heißt, die Last, insbesondere eine Drehfeldmaschine, liefert Energie in den Zwischenkreis, dafür gesorgt, dass eine maximal zulässige Zwischenkreis-Spannung nicht überschritten wird. Ein Teil dieser Bremsleistung wird dazu verwendet, das Schleppmoment des leer laufenden Dieselmotors auszugleichen. Nachteilig wirkt sich aus, dass für den Bremssteller ein weiterer Stromrichter-Brückenzweig verwendet werden muss und die zusätzliche Verschienung dieses Bremsstellers mit der Zwischenkreis-Verschienung erfolgen muss. Dabei ist darauf zu achten, dass der Bremssteller niederinduktiv angeschlossen werden sollte. In Abhängigkeit des Bremsmoments kann es vorkommen, dass weitere Stromrichter-Brückenzweige für den Bremssteller verwendet werden müssen, die elektrisch parallel geschaltet werden. Außerdem wird eine Steuervorrichtung für den abschaltbaren Thyristor benötigt. Ferner weist der als Bremssteller verwendete abschaltbare Thyristor ein aufwändiges Beschaltungsnetzwerk auf, das entsprechend Platz benötigt.

Aus der DE 102 10 164 A1 ist eine Vorrichtung zur mehrfachen Gleichrichtereinspeisung eines permanent erregten Synchronmotors in einer Kraftanlage bekannt. Dieser permanent erregte Synchrongenerator weist zwei mehrphasige Ständerwicklungssysteme auf, die in ihrer Windungszahl unterschiedlich ausgeführt sind. Das eine Wicklungssystem ist an einem gesteuerten Gleichrichter, z.B. einem IGBT-Gleichrichter, angeschlossen. Dieser gesteuerte Gleichrichter hat die Aufgabe, den permanent erregten Synchrongenerator bezüglich Leistungsabgabe und somit Drehzahl zu regeln. Dazu fließt im Bereich kleiner Drehzahlen Strom und somit die elektrische Leistung ausschließlich über dieses Wicklungssystem und damit über den gesteuerten Gleichrichter, der an einem Gleichspannungszwischenkreis angeschlossen ist. Das zweite Wicklungssystem ist an einem ungesteuerten Gleichrichter, beispielsweise einer mehrpulsigen Diodenbrücke, angeschlossen, der ebenfalls an den gleichen Gleichspannungszwischenkreis wie der gesteuerte Gleichrichter angeschlossen ist. Ist die verkettete (d.h. Phase zu Phase) Rotationsspannung (auch als Polradspannung bezeichnet) größer als die Zwischenkreisspannung des Gleichspannungszwischenkreises, kann im zweiten Wicklungssystem ein Strom fließen, der über den ungesteuerten Gleichrichter auf den Gleichspannungszwischenkreis gleichgerichtet wird. Dabei kann durch die magnetische Kopplung zwischen dem ersten und zweiten Wicklungssystem der Strom im zweiten Wicklungssystem durch den Strom im ersten Wicklungssystem, der durch den aktiven Gleichrichter (gesteuerter Gleichrichter) geregelt wird, in Amplitude und Phasenlage beeinflusst werden. Dies bedeutet, dass mit Hilfe des gesteuerten Gleichrichters auch der Strom in dem Wicklungssystem des ungesteuerten Gleichrichters zu einem gewissen Grad geregelt werden kann. Die Wirkleistungsübertragung dieser Vorrichtung wird hauptsächlich vom ungesteuerten Gleichrichter übernommen, damit der gesteuerte Gleichrichter in seiner Leistung klein dimensioniert und damit kostengünstig wird. Mit Hilfe dieses gesteuerten Gleichrichters, der allgemein auch als selbstgeführter Pulsstromrichter bezeichnet wird, wird der stark übererregte Betrieb des permanent erregten Synchrongenerators vermieden. Außerdem werden Harmonische im Generatormoment, die durch den ungesteuerten Gleichrichter verursacht werden, kompensiert. Der Erfindung liegt nun die Aufgabe zugrunde, das gattungsgemäße dieselelektrische Antriebssystem dahingehend zu verbessern, dass auf einen zusätzlichen Bremssteller verzichtet werden kann.

Diese Aufgabe wird erfindungsgemäß mit den kennzeichnenden Merkmalen des Anspruchs 1 in Verbindung mit den Merkmalen seines Oberbegriffs gelöst.

Dadurch, dass als Bremswiderstand eine mehrphasige Bremswiderstandsanordnung vorgesehen ist, die mittels einer mehrphasigen Schaltvorrichtung elektrisch in Reihe zum mehrphasigen Ständerwicklungssystem des permanent erregten Synchrongenerators schaltbar ist, wird kein zusätzlicher Bremssteller mehr benötigt. Der Bremsstrom wird mittels des generatorseitigen selbstgeführten Pulsstromrichters des Spannungszwischenkreis-Umrichters gesteuert. Wird zum Bremsen die mehrphasige Bremswiderstandsanordnung mittels der mehrphasigen Schaltvorrichtung elektrisch in Reihe zum mehrphasigen Ständerwicklungssystem des permanent erregten Synchrongenerators geschaltet, so wird dieser Synchrongenerator bei maximaler Bremsleistung (max. Bremsstrom) nahezu kurzgeschlossen betrieben. Bei ausreichender Längsinduktivität überschreitet der Dauerkurzschlussstrom den Nennstrom dieses permanent erregten Synchrongenerators nur ein wenig. Dieser Dauerkurzschlussstrom fließt durch die in Serie geschalteten Bremswiderstände der mehrphasigen Bremswiderständsanordnung, wodurch die benötigte Bremsleistung dissipiert wird. Durch den fast gänzlich kurzgeschlossenen permanent erregten Synchrongenerator im Bremsbetrieb stellt eine generierte Stromrichter-Eingangsspannung des generatorseitigen selbstgeführten Pulsstromrichters des Spannungszwischenkreis-Umrichters an den Klemmen der mehrphasigen Bremswiderstandsanordnung zur Verfügung, um den Bremsstrom zu treiben.

Da der Kurzschlussstrom des permanent erregten Synchrongenerators zwischen Leerlaufdrehzahl und Nenndrehzahldes Dieselmotors annähernd konstant ist, kann im Bremsbetrieb die Dieselmotordrehzahl frei gewählt werden. Die Eisenverluste des permanent erregten Synchrongenerators im Bremsbetrieb sind infolge des feldschwächenden Kurzschlussstromes sehr gering. Die der Drehzahl des Dieselmotors entsprechenden Schleppverluste können vom permanent erregten Synchrongenerator mit einer kleinen, positiven drehmomentbildenden Stromkomponente des Stromrichtermotors ausgeglichen werden. Dadurch kann der Dieselmotor ohne Kraftstoffeinspritzung im elektrischen Bremsen laufen.

Wie die Bremswiderstände der mehrphasigen Bremswiderstandsanordnung elektrisch in Reihe zu Wicklungen des mehrphasigen Ständerwicklungssystems des permanent erregten Synchrongenerators geschaltet werden können, ist den Unteransprüchen 2 bis 5 zu entnehmen.

Bei einer ersten Ausführungsform wird die Serienschaltung eines Bremswiderstandes der mehrphasigen Bremswiderstandsanordnung mit einer Wicklung des mehrphasigen Ständerwicklungssystems dadurch erreicht, dass ein Sternpunkt des permanent erregten Synchrongenerators aufgehoben wird. Der Sternpunkt wird im Generatorbetrieb durch zwei Trenner hergestellt, die stromlos bei gesperrtem Spannungszwischenkreis-Umrichter geschaltet werden. Dies kann auch bei Nenndrehzahl des Dieselmotors geschehen, da ein untererregter Betrieb des permanent erregten Synchrongenerators vorliegt und der Dieselgenerator auch bei voller Drehzahl nicht über die Freilaufdioden des generatorseitigen selbstgeführten Pulsstromrichters des gesperrten Spannungszwischenkreis-Umrichters in den Zwischenkreis speisen kann. Dadurch kann von maximaler Dieselgeneratorleistung bei Nenndrehzahl in den Bremsbetrieb übergegangen werden, ohne dass der Dieselmotor im Leerlauf sein muss. Durch das Auftrennen des Sternpunktes liegt dann bei kurzgeschlossenem permanent erregten Synchrongenerator nahezu die gesamte Stromrichter-Eingangsspannung des Spannungszwischenkreis-Umrichters an den Widerstandsklemmen der Widerstände der mehrphasigen Bremswiderstandsanordnung an. Damit mittels einer mehrphasigen Schaltvorrichtung Bremswiderstände einer Bremswiderstandsanordnung elektrisch in Reihe zu Wicklungen eines mehrphasigen Ständerwicklungssystems eines permanent erregten Synchrongenerators geschaltet werden können, müssen von jeder Wicklung des mehrphasigen Ständerwicklungssystems deren Wicklungsenden aus dem permanent erregten Synchrongenerator herausgeführt sein. Damit ist der Sternpunkt des permanent erregten Synchrongenerators außerhalb des Generators verschaltet.

Bei einer weiteren Ausführungsform der Serienschaltung einer mehrphasigen Bremswiderstandsanordnung mit einem mehrphasigen Ständerwicklungssystem eines permanent erregten Synchrongenerators weist diese Bremswiderstandsanordnung wenigstens einen Bremswiderstand auf, der mittels eines Kurzschließers überbrückbar ist. Diese Bremswiderstandsanordnung kann auch zwei Widerstände aufweisen, die jeweils von einem Kurzschließer überbrückbar sind. Weist diese Bremswiderstandsanordnung drei Widerstände auf, so sind diese ebenfalls jeweils mittels eines Kurzschließers überbrückbar. Das heißt, bei weiteren Ausführungsformen sind die Bremswiderstandsanordnungen ein-, zwei- oder dreiphasig ausgeführt. Jeder Bremswiderstand einer jeden Bremswiderstandsanordnung ist elektrisch in Reihe zu einer Wicklung des mehrphasigen Ständerwicklungssystems des permanent erregten Synchrongenerators geschaltet. Im Bremsbetrieb wird jeder Kurzschließer geöffnet. Bei diesen weiteren Ausführungsformen müssen nicht mehr beide Wicklungsenden einer jeden Wicklung des mehrphasigen Ständerwicklungssystems des permanent erregten Synchrongenerators aus diesem herausgeführt werden. Dadurch ist der Sternpunkt des mehrphasigen Ständerwicklungssystems intern verschaltet. Somit wird keine Sonderbauform eines permanent erregten Synchrongenerators mehr verwendet.

Bei einer weiteren vorteilhaften Ausführungsform sind die Bremswiderstände der mehrphasigen Bremswiderstandsanordnung, die elektrisch in Reihe zu einer Wicklung des mehrphasigen Ständerwicklungssystems geschaltet sind, mittels eines mehrphasigen Leistungsschalters kurzschließbar. Somit übernimmt dieser mehrphasige Leistungsschalter im gesamten Betrieb des dieselelektrischen Antriebssystems eine Schutzfunktion für den generatorseitigen selbstgeführten Pulsstromrichter des Spannungszwischenkreis-Umrichters.

Zur weiteren Erläuterung der Erfindung wird auf die Zeichnung Bezug genommen, in der mehrere Ausführungsbeispiele eines erfindungsgemäßen dieselelektrischen Antriebssystems schematisch veranschaulicht sind.
- Figur 1: zeigt ein Ersatzschaltbild eines gattungsgemäßen dieselelektrischen Antriebssystems, in der
- Figur 2: ist ein Ersatzschaltbild einer ersten Ausführungsform eines erfindungsgemäßen dieselelektrischen Antriebssystems dargestellt, die
- Figur 3: zeigt ein Ersatzschaltbild einer Variante der ersten Ausführungsform des erfindungsgemäßen dieselelektrischen Antriebssystems nach Fig. 1, die
- Figur 4: zeigt ein Ersatzschaltbild eines Stromrichter-Brückenzweigmoduls eines generatorseitigen selbstgeführten Pulsstromrichters eines Spannungszwischenkreis-Umrichters nach Figur 2, die
- Figur 5: zeigt ein Zeigerdiagramm eines nahezu kurzgeschlossenen permanent erregten Synchrongenerators im Bremsbetrieb mit maximaler Bremsleistung bei Dieselmotor-Leerlaufdrehzahl, in der
- Figur 6: ist ein Ersatzschaltbild einer zweiten Ausführungsform mit Varianten eines erfindungsgemäßen dieselelektrischen Antriebssystems dargestellt und die
- Figur 7: zeigt ein Ersatzschaltbild einer dritten Ausführungsform eines erfindungsgemäßen dieselelektrischen Antriebssystems.

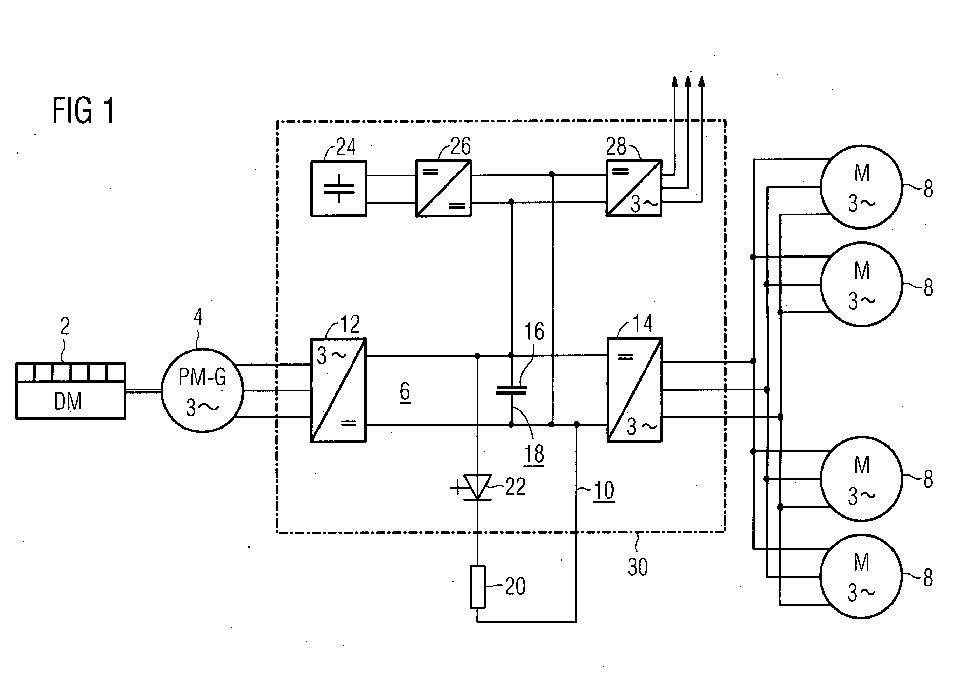

In der Figur 1, die ein Ersatzschaltbild eines gattungsgemäßen dieselelektrischen Antriebssystems zeigt, sind mit 2 ein Dieselmotor, mit 4 ein permanent erregter Synchrongenerator, mit 6 ein Spannungszwischenkreis-Umrichter, mit 8 mehrere Drehfeldmaschinen, insbesondere Drehstrom-Asynchronmotoren, und mit 10 einen Bremschopper versehen. Der Spannungszwischenkreis-Umrichter weist einen generator- und lastseitigen selbstgeführten Pulsstromrichter 12 und 14 auf, die mittels eines eine Zwischenkreis-Kondensatorbatterie 16 aufweisenden Zwischenkreises 18 gleichspannungsseitig miteinander elektrisch leitend verbunden sind. Elektrisch parallel zu diesem Zwischenkreis 18 ist der Bremschopper 10 geschaltet, der einen Bremswiderstand 20 und einen Bremssteller 22, beispielsweise einen abschaltbaren Thyristor, aufweist, die elektrisch in Reihe geschaltet sind. Außerdem sind in diesem Ersatzschaltbild eine Kondensatorbatterie 24, insbesondere aus Supercaps, aufgebaut, ein DC/DC-Wandler 26 und ein Hilfswechselrichter 28 dargestellt. Eingangsseitig ist dieser DC/DC-Wandler 26 mit der Kondensatorbatterie 24 und ausgangsseitig mit den gleichspannungsseitigen Anschlüssen des Hilfswechselrichters 28 verknüpft. Außerdem ist der DC/DC-Wandler 26 ausgangsseitig elektrisch zum Zwischenkreis 18 des Spannungszwischenkreis-Umrichters 6 geschaltet. An den wechselspannungsseitigen Anschlüssen des Hilfswechselrichters 28 sind Hilfsantriebe angeschlossen, die hier nicht explizit dargestellt sind. Der Dieselmotor 2 und der permanent erregte Synchrongenerator 4 sind läuferseitig mechanisch miteinander gekoppelt, wobei dieser permanent erregte Synchrongenerator 4 ständerseitig mit wechselspannungsseitigen Anschlüssen des generatorseitigen selbstgeführten Pulsstromrichters 12 des Spannungszwischenkreis-Umrichters 6 verknüpft ist.

Da dieses Ersatzschaltbild ein Ersatzschaltbild einer dieselelektrischen Rangierlokomotive ist, ist mit 30 ein Traktionscontainer bezeichnet, der die Stromrichterelektronik aufnimmt. Außerhalb dieses Traktionscontainers 30 sind der Bremswiderstand und der dieselangetriebene permanent erregte Synchrongenerator 4 angeordnet. Die vier Drehstrom-Asynchronmotoren 8 sind die Motoren der beiden Drehgestelle einer dieselelektrischen Rangierlokomotive.

Der Bremswiderstand 20, der in diesem Ersatzschaltbild als ein Widerstand ausgeführt ist, kann auch aus in Reihe geschalteten Widerständen aufgebaut sein. Der abschaltbare Thyristor 22 ist in der Realisierung ein Stromrichter-Brückenzweigmodul, bei dem an Stelle eines zweiten abschaltbaren Thyristors nur die zugehörige Freilaufdiode verwendet wird. Zu diesem Stromrichter-Brückenzweigmodul gehört außerdem ein Beschaltungsnetzwerk für den abschaltbaren Thyristor und eine so genannte Gate-Unit.

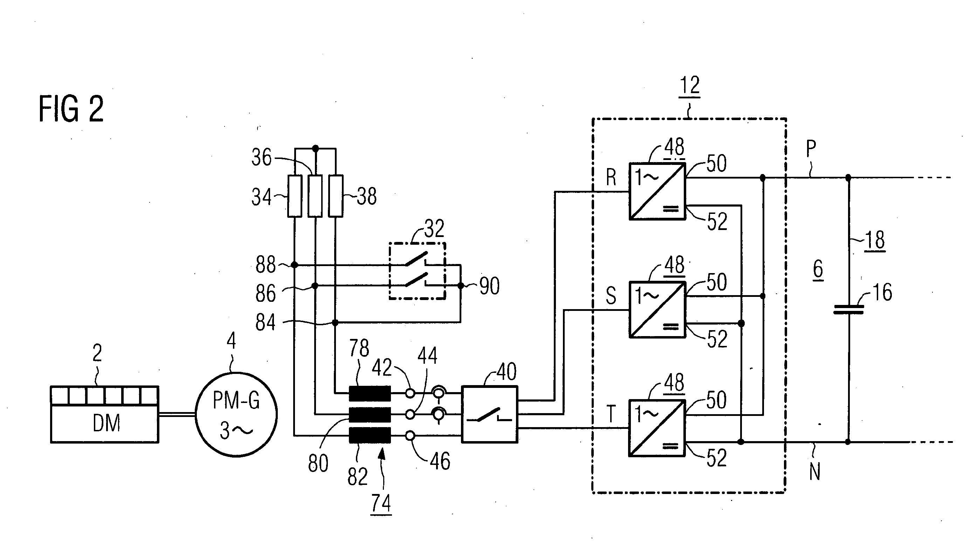

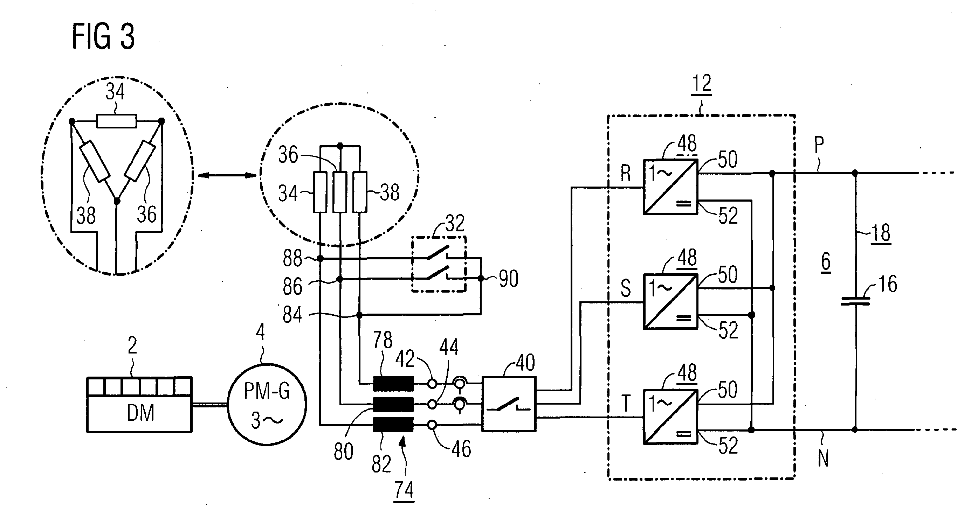

In der Figur 2 ist ein Ersatzschaltbild einer ersten Ausführungsform eines erfindungsgemäßen dieselelektrischen Antriebssystems schematisch dargestellt. Wegen der Übersichtlichkeit sind der lastseitige selbstgeführte Pulsstromrichter 14 des Spannungszwischenkreis-Umrichters 6 und die Drehstrom-Asynchronmotoren 8, wie in der Figur 1 gezeigt, nicht mehr dargestellt. Die wechselspannungsseitigen Anschlüsse R, S und T des generatorseitigen selbstgeführten Pulsstromrichters 12 des Spannungszwischenkreis-Umrichters 6 sind jeweils mittels eines Leistungsschalters 40 mit einem ständerseitigen Anschluss 42, 44 und 46 des permanent erregten Synchrongenerators 4 trennbar verbunden. In dieser Darstellung sind von diesem permanent erregten Synchrongenerator 4 außerdem die Wicklungen 78, 80 und 82 seines mehrphasigen Ständerwicklungssystems 74 dargestellt. Diese Wicklungen 78, 80 und 82 sind jeweils einerseits mit dem ständerseitigen Anschluss 42, 44 und 46 und andererseits mit einem von drei Bremswiderständen 34, 36 °und 38 elektrisch leitend verbunden. Die Bremswiderstände 34, 36 und 38 der mehrphasigen Bremswiderstandsanordnung sind in dieser Darstellung elektrisch in Stern geschaltet, und entsprechen wertmäßig dem Bremswiderstand 20 der Ausführungsform gemäß Figur 1. Diese Bremswiderstände 34, 36 und 38 der mehrphasigen Bremswiderstandsanordnung können auch elektrisch in Dreieck geschaltet werden (Figur 3). Außerhalb ist jeweils ein Verbindungspunkt 86 und 88 mittels einer Schaltvorrichtung 32 mit einem Verbindungspunkt 84 elektrisch leitend verbindbar. Der Verbindungspunkt der Schaltvorrichtung 32, der mit dem Verbindungspunkt 84 elektrisch leitend verbunden ist, bildet einen außerhalb des permanent erregten Synchrongenerators 4 liegenden Sternpunkt 90. Dieser Sternpunkt 90 wird im Generatorbetrieb durch diese mehrphasige Schaltvorrichtung 32, die beispielsweise ein zweipoliger Trenner ist, dargestellt, die stromlos bei gesperrtem generatorseitigen selbstgeführten Stromrichter 12 des Spannungszwischenkreis-Umrichters 6 geschaltet wird. Dies kann auch bei Nenndrehzahl des dieselelektrischen Generators geschehen, da ein untererregter Betrieb des permanent erregten Synchrongenerators 4 vorliegt und der permanent erregte Synchrongenerator 4 auch bei voller Drehzahl nicht über die Freilaufdioden des gesperrten generatorseitigen selbstgeführten Pulsstromrichters 12 des Spannungszwischenkreis-Umrichters 6 in den Zwischenkreis 18 speisen kann. In diesem untererregten Betrieb ist die Polradspannung dieses permanent erregten Synchrongenerators 4 dafür zu gering. Dadurch kann von maximaler Dieselgeneratorleistung bei Nenndrehzahl des Dieselmotors 2 sehr schnell in den Bremsbetrieb übergegangen werden, ohne dass der Dieselmotor 2 im Leerlauf sein muss. Durch das Auftrennen des außen liegenden Sternpunktes 90 des permanent erregten Synchrongenerators 4 liegt dann bei kurzgeschlossenem permanent erregten Synchrongenerator 4 nahezu die volle Eingangsspannung des generatorseitigen selbstgeführten Pulsstromrichters 12 an den Widerstandsklemmen (Verbindungspunkte 84, 86 und 88) an. Damit diese Bremswiderstände 34, 36 und 38 der mehrphasigen Bremswiderstandsanordnung elektrisch in Reihe zu jeweils einer Wicklung 78, 80 und 82 des mehrphasigen Ständerwicklungssystems 74 des permanent erregten Synchrongenerators 4 geschaltet werden können, müssen die Wicklungsenden (Verbindungspunkte 84, 86, 88 und ständerseitige Anschlüsse 42, 44, 46) dieser Wicklungen 78, 80 und 82 aus dem permanent erregten Synchrongenerator 4 herausgeführt sein. Mittels der mehrphasigen Schaltvorrichtung 32 kann dann für den normalen Betrieb ein außerhalb des permanent erregten Synchrongenerators 4 liegender Sternpunkt 90 des Ständerwicklungssystems 74 geschaltet werden.

Durch diese erfindungsgemäße schaltbare Serienschaltung dreier Bremswiderstände 34, 36 und 38 der mehrphasigen Bremswiderstandsanordnung mit den Wicklungen 78, 80 und 82 des mehrphasigen Ständerwicklungssystems 74 des permanent erregten Synchrongenerators 4 mit einem Spannungszwischenkreis-Umrichter 6 kann mit Hilfe eines zweipoligen, stromlos geschalteten Trenners 32 zwischen Generatorbetrieb und Bremsbetrieb umgeschaltet werden, wodurch eine hohe Bremsleistung realisiert werden und die Drehzahl des Dieselmotors im Bremsbetrieb frei eingestellt werden kann.

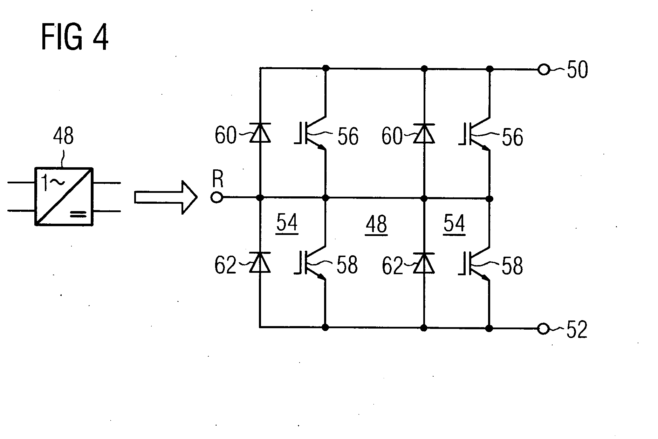

Der generatorseitige selbstgeführte Pulsstromrichter 12 des Spannungszwischenkreis-Umrichters 6 wird in dieser Ausführungsform des dieselelektrischen Antriebssystems mittels Stromrichter-Brückenzweigmodule 48 realisiert. Ein Ersatzschaltbild eines Stromrichter-Brückenzweigmoduls 48 ist in der Figur 4 näher dargestellt. Die gleichspannungsseitigen Anschlüsse 50 und 52 eines jeden Stromrichter-Brückenzweigmoduls 48 des generatorseitigen selbstgeführten Pulsstromrichters 12 sind jeweils mit einem Potential des Zwischenkreises 18 des Spannungszwischenkreis-Umrichters 6 elektrisch leitend verbunden. Dabei sind die gleichspannungsseitigen Anschlüsse 50 der drei Stromrichter-Brückenzweigmodule 48 des selbstgeführten Pulsstromrichters 12 jeweils mit einem positiven Potential P des Zwischenkreises 18 verbunden, wogegen die gleichspannungsseitigen Anschlüsse 52 dieser drei Stromrichter-Brückenzweigmodule 48 jeweils mit einem negativen Potential N des Zwischenkreises 18 verknüpft sind.

Gemäß diesem Ersatzschaltbild nach Figur 4 weist das Stromrichter-Brückenzweigmodul 48 zwei Brückenzweigmodule 54 auf, die elektrisch parallel geschaltet sind. Jedes Brückenzweigmodul 54 weist zwei elektrisch in Reihe geschaltete abschaltbare Halbleiterschalter 56 und 58, insbesondere zwei Insulated Gate Bipolar Transistoren (IGBT), auf, die jeweils mit einer korrespondierenden Freilaufdiode 60 bzw. 62 versehen sind. In der Traktionstechnik werden Traktionsumrichter möglichst modular aufgebaut, wobei als kleinste Einheit ein Brückenzweigmodul 54 verwendet wird. In der Darstellung gemäß Figur 3 erhält man durch die Parallelschaltung zweier Brückenzweigmodule 54 ein Stromrichter-Brückenzweigmodul 48 für eine hohe Leistung.

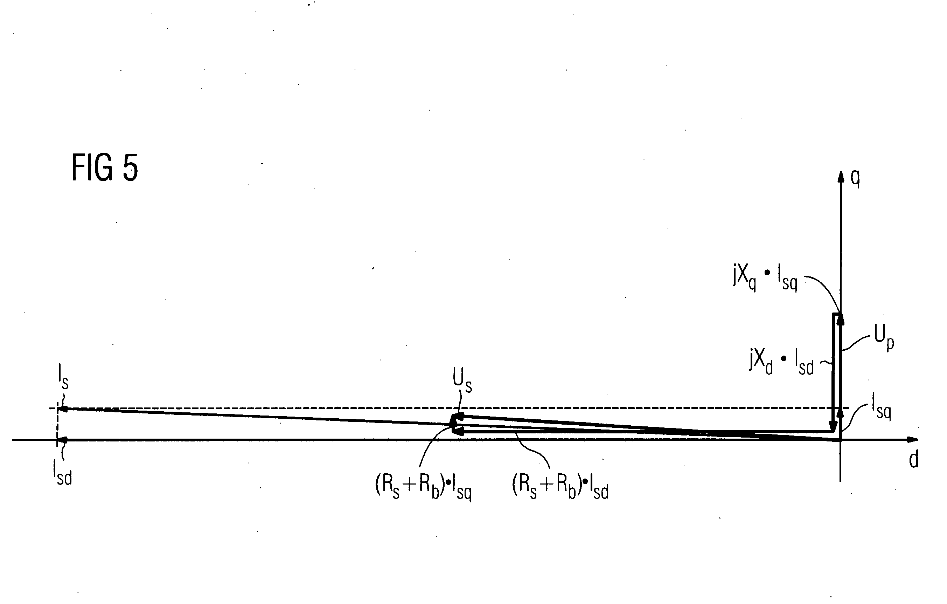

In der Figur 5 ist in einem orthogonalen Koordinatensystem d, q ein Zeigerdiagramm dargestellt, das für den Bremsbetrieb bei voller Bremsleistung gilt. Im Bremsbetrieb werden die drei Bremswiderstände 34, 36 und 38 der mehrphasigen Bremswiderstandsanordnung jeweils mit einer Wicklung 78, 80 und 82 des mehrphasigen Ständerwicklungssystems 74 des permanent erregten Synchrongenerators 4 elektrisch in Reihe geschaltet. Dadurch wird der permanent erregte Synchrongenerator 4 nahezu kurzgeschlossen betrieben, wobei bei ausreichender Längsinduktivität L_{d} ein Dauerkurzschlussstrom I_{sd} den Nennstrom nicht oder nur wenig überschreitet. Dieser Dauerkurzschlussstrom I_{sd} fließt durch die in Reihe geschalteten Bremswiderstände 34, 36 und 38, wodurch die benötigte Bremsleistung dissipiert wird. Durch den fast gänzlich kurzgeschlossenen permanent erregten Synchrongenerator 4 steht eine an den wechselspannungsseitigen Anschlüssen R, S und T des generatorseitigen selbstgeführten Pulsstromrichters 12 des Spannungszwischenkreis-Umrichters 6 anstehende Spannung Uₛ nahezu vollständig an den Klemmen (Verbindungspunkte 84, 86, 88) der Bremswiderstände 34, 36 und 38 an, um einen Bremsstrom Iₛ zu treiben. Da der Dauerkurzschlussstrom I_{sd} des permanent erregten Synchrongenerators 4 zwischen Leerlauf, beispielsweise 600 - 700 min⁻¹ und einer Nenndrehzahl von beispielsweise 1800 - 1900 min⁻¹ des dieselelektrischen Motors 2 annähernd konstant ist, kann im Bremsbetrieb die Drehzahl des Dieselmotors 2 frei gewählt werden. Die Eisenverluste des permanent erregten Synchrongenerators im Bremsbetrieb sind infolge des feldschwächenden Kurzschlussstromes I_{sd} sehr gering. Die der Drehzahl des Dieselmotors 2 entsprechenden Schleppverluste können von dem permanent erregten Synchrongenerator 4 mit einer geringen positiven q-Stromkomponente (drehmomentbildender Strom I_{sq}) ausgeglichen werden. Dadurch kann der Dieselmotor 2 ohne Kraftstoffeinspritzung im Bremsbetrieb des dieselelektrischen Antriebssystems laufen.

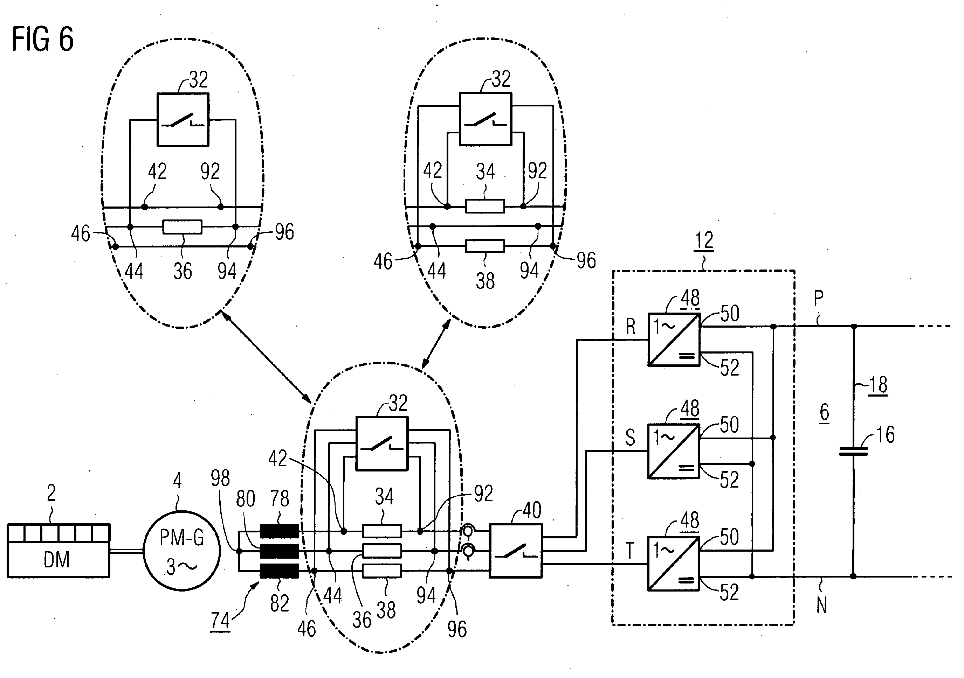

In der Figur 6 ist eine zweite Ausführungsform des erfindungsgemäßen dieselelektrischen Antriebssystems schematisch dargestellt. Diese Ausführungsform unterscheidet sich von der Ausführungsform gemäß Figur 2 dadurch, dass an den ständerseitigen Anschlüssen 42, 44 und 46 des permanent erregten Synchrongenerators 4 nun die Bremswiderstände 34, 36 und 38 der mehrphasigen Bremswidestandsanordnung angeschlossen sind. Jeweils ein zweiter Anschluss eines Bremswiderstandes 34, 36 und 38 bildet somit einen wechselspannungsseitigen Anschluss 92, 94 und 96 des permanent erregten Synchrongenerators 4, an denen mittels des mehrphasigen Leistungsschalters 40 die wechselspannungsseitigen Anschlüsse R, S und T des generatorseitigen selbstgeführten Pulsstromrichters 12 des Spannungszwischenkreis-Umrichters 6 angeschlossen sind. Die Wicklungen 78, 80 und 82 des mehrphasigen Ständerwicklungssystems 74 des permanent erregten Synchrongenerators 4 sind bei dieser Ausführungsform mittels eines innen liegenden Sternpunktes 98 elektrisch in Stern geschaltet. Die Bremswiderstände 34, 36 und 38 der mehrphasigen Bremswiderstandsanordnung sind mittels einer mehrphasigen Schaltvorrichtung 32 jeweils elektrisch überbrückbar. Das heißt, außerhalb des Bremsbetriebes des dieselelektrischen Antriebssystems sind diese Bremswiderstände 34, 36 und 38 elektrisch kurzgeschlossen.

Anstelle von drei Bremswiderständen 34, 36 und 38 können auch nur zwei Bremswiderstände 34 und 38 oder aber nur ein Bremswiderstand 36 vorgesehen werden, die ebenfalls elektrisch in Reihe zu zwei bzw. einer Wicklung 78 und 82 bzw. 80 des mehrphasigen Ständerwicklungssystems 74 mittels der Schaltvorrichtung 2 geschaltet werden können. Diese beiden Möglichkeiten sind ausschnittsweise ebenfalls in dieser Darstellung der Figur 6 veranschaulicht. Entsprechend der Anzahl der verwendeten Bremswiderstände 34, 36 und 38 der mehrphasigen Bremswiderstandsanordnung weist die Schaltvorrichtung 32 einen dreipoligen bzw. zweipoligen bzw. einpoligen Trenner auf. Entsprechend einer geforderten Bremsleistung und abhängig eines in dem permanent erregten Synchrongenerator 4 fließenden Stromes-I_{sd} im Bremsbetrieb müssen die oder der Bremswiderstand 34 und 38 bzw. 36 dimensioniert werden. Der Vorteil dieser in Figur 6 dargestellten Ausführungsform besteht darin, dass nicht mehr alle Wicklungsenden.der Wicklungen 78, 80 und 82 des mehrphasigen Ständerwicklungssystems 74 aus dem permanent erregten Synchrongenerator 4 herausgeführt werden müssen. Somit kann jede im Handel erhältlich permanent erregte Synchronmaschine verwendet werden.

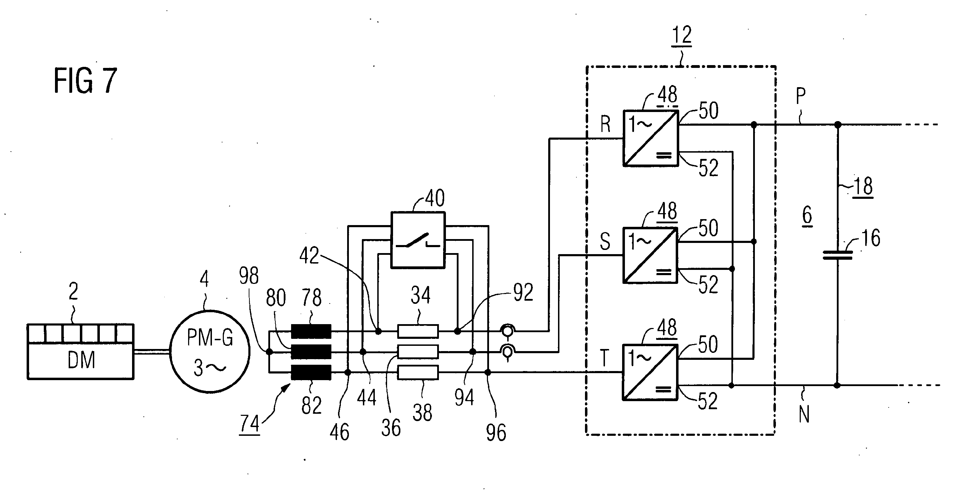

In der Figur 7 ist eine dritte Ausführungsform des dieselelektrischen Antriebssystems nach der Erfindung veranschaulicht. Diese Ausführungsform unterscheidet sich von der Ausführungsform gemäß Figur 6 dadurch, dass anstelle der mehrphasigen Schaltvorrichtung 32 nun der mehrphasige Leistungsschalter 40 verwendet wird. Dieser Leistungsschalter 40 übernimmt somit zwei Aufgaben, nämlich den Schutz des generatorseitigen selbstgeführten Pulsstromrichters 12 des Spannungszwischenkreis-Umrichters 6 im normalen Betrieb und im Bremsbetrieb und die Funktion dreiphasiges Kurzschließen der Bremswiderstände 34, 36 und 38. In der Wirkungsweise unterscheiden sich diese drei Ausführungsformen des erfindungsgemäßen dieselelektrischen Antriebssystems gemäß der Figuren 2, 6 und 7 nicht.

## Patentansprüche

1. Dieselelektrisches Antriebssystem mit einem permanent erregten Synchrongenerator (4), der läuferseitig mit einem Dieselmotor (2) mechanisch gekoppelt und ständerseitig mit einem Spannungszwischenkreis-Umrichter (6) verbunden ist, der generator- und lastseitig jeweils einen selbstgeführten Pulsstromrichter (12, 14) aufweist, die gleichspannungsseitig mittels eines Gleichspannungs-Zwischenkreises (18) miteinander verknüpft sind, und mit einem Bremswiderstand, **dadurch gekennzeichnet, dass** als Bremswiderstand eine mehrphasige Bremswiderstandsanordnung vorgesehen ist und dass diese mehrphasige Bremswiderstandsanordnung mittels einer mehrphasigen Schaltvorrichtung (32) elektrisch in Reihe zum mehrphasigen Ständerwicklungssystem (74) des permanent erregten Synchrongenerators (4) schaltbar ist.

2. Dieselelektrisches Antriebssystem nach Anspruch 1, **dadurch gekennzeichnet, dass** jeweils eine Wicklung (78, 80, 82) des mehrphasigen Ständerwicklungssystems (74) des permanent erregten Synchrongenerators (4) und ein Bremswiderstand (34, 36, 38) der mehrphasigen Bremswiderstandsanordnung elektrisch in Reihe schaltbar sind und dass die mehrphasige Schaltvorrichtung (32) zwei Trenner aufweist, die einerseits jeweils mit einem Verknüpfungspunkt (86, 88) eines Bremswiderstandes (34, 36) mit einer Wicklung (80, 82) des mehrphasigen Ständerwicklungssystems (74) des permanent erregten Synchrongenerators (4) und andererseits miteinander verbunden sind, und dass dieser gemeinsame Verknüpfungspunkt (90) der beiden Trenner mit einem Verknüpfungspunkt (84) eines Bremswiderstandes (38) mit einer Wicklung (78) des mehrphasigen Ständerwicklungssystems (74) des permanent erregten Synchrongenerators (4) verknüpft ist.

3. Dieselelektrisches Antriebssystem nach Anspruch 1, **dadurch gekennzeichnet, dass** jeweils eine Wicklung (78, 80, 82) des mehrphasigen Ständerwicklungssystems (74) des permanent erregten Synchrongenerators (4) mit einem Bremswiderstand (34, 36, 38) der mehrphasigen Bremswiderstandsanordnung elektrisch in Reihe geschaltet sind und dass die mehrphasige Schaltvorrichtung (32) drei Kurzschließer aufweist, die jeweils elektrisch parallel zu einem Bremswiderstand (34, 36, 38) der dreiphasigen Bremswiderstandsanordnung geschaltet sind.

4. Dieselelektrisches Antriebssystem nach Anspruch 1, **dadurch gekennzeichnet, dass** jeweils zwei Wicklungen (78, 82) des mehrphasigen Ständerwicklungssystems (74) des permanent erregten Synchrongenerators (4) mit einem Bremswiderstand (34, 38) der mehrphasigen Bremswiderstandsanordnung elektrisch in Reihe geschaltet sind, und dass die mehrphasige Schaltvorrichtung (32) zwei Kurzschlüsse aufweist, die jeweils einem Bremswiderstand (34, 38) der dreiphasigen Bremswiderstandsanordnung elektrisch parallel geschaltet sind.

5. Dieselelektrisches Antriebssystem nach Anspruch 1, dadurch gekenntzeichnet, dass eine Wicklung (80) des mehrphasigen Ständerwicklungssystems (74) des permanent erregten Synchrongenerators (4) mit einem Bremswiderstand (36) der mehrphasigen Bremswiderstandsanordnung elektrisch in Reihe geschaltet sind, und dass die Schaltvorrichtung (32) einen Kurzschließer aufweist, der diesem Bremswiderstand (36) elektrisch parallel geschaltet ist.

6. Dieselelektrisches Antriebssystem nach Anspruch 1, **dadurch gekennzeichnet, dass** jeweils eine Wicklung (78, 80, 82) des mehrphasigen Ständerwicklungssystems (74) des permanent erregten Synchrongenerators (4) mit einem Bremswiderstand (34, 36, 38) der mehrphasigen Bremswiderstandsanordnung elektrische in Reihe geschaltet sind und dass ein mehrphasiger Leistungsschalter (40) elektrisch parallel zu diesen Bremswiderständen (34, 36, 38) geschaltet sind.

7. Dieselelektrisches Antriebssystem Anspruch 2, **dadurch gekennzeichnet, dass** die Bremswiderstände (34, 36, 38) der mehrphasigen Bremswiderstandsanordnung elektrisch in Stern geschaltet sind.

8. Dieselelektrisches Antriebssystem nach Anspruch 2, **dadurch gekennzeichnet, dass** die Bremswiderstände (34, 36, 38) der mehrphasigen Bremswiderstandsanordnung elektrisch in Reihe geschaltet sind.

## Claims

1. Diesel-electric drive system having a synchronous generator (4) with permanent magnet excitation, the rotor side of which is mechanically coupled to a diesel engine (2) and the stator side of which is connected to a voltage intermediate-circuit converter (6) which has a self-commutated pulse-control converter (12, 14) both on the generator side and on the load side, which are linked to one another on the DC voltage side by means of a DC voltage intermediate circuit (18), and having a braking resistance, **characterized in that** a polyphase braking resistance arrangement is provided as the braking resistance, and **in that** this polyphase braking resistance arrangement can be connected, by means of a polyphase switching apparatus (12), electrically in series with the polyphase stator winding system (74) of the synchronous generator (4) with permanent magnet excitation.

2. Diesel-electric drive system according to Claim 1, **characterized in that** one winding (78, 80, 82) of the polyphase stator winding system (74) of the synchronous generator (4) with permanent magnet excitation, and a braking resistance (34, 36, 38) in the polyphase braking resistance arrangement can in each case be connected electrically in series, and **in that** the polyphase switching apparatus (32) has two disconnectors, which are each connected on the one hand to a junction point (86, 88) of a braking resistance (34, 36) to a winding (80, 82) of the polyphase stator winding system (74) of the synchronous generator (4) with permanent magnet excitation, and on the other hand are connected to one another, and **in that** this common junction point (90) of the two disconnectors is linked to a junction point (84) of a braking resistance (38) to a winding (78) of the polyphase stator winding system (74) of the synchronous generator (4) with permanent magnet excitation.

3. Diesel-electric drive system according to Claim 1, **characterized in that** one winding (78, 80, 82) of the polyphase stator winding system (74) of the synchronous generator (4) with permanent magnet excitation is in each case connected electrically in series with one braking resistance (34, 36, 38) in the polyphase braking resistance arrangement, and **in that** the polyphase switching apparatus (32) has three short-circuiters which are each connected electrically in parallel with one braking resistance (34, 36, 38) in the three-phase braking resistance arrangement.

4. Diesel-electric drive system according to Claim 1, **characterized in that** two windings (78, 82) of the polyphase stator winding system (74) of the synchronous generator (4) with permanent magnet excitation are in each case connected electrically in series with one braking resistance (34, 38) in the polyphase braking resistance arrangement, and **in that** the polyphase switching apparatus (32) has two short-circuiters, which are each connected electrically in parallel with one braking resistance (34, 38) in the three-phase braking resistance arrangement.

5. Diesel-electric drive system according to Claim 1, **characterized in that** one winding (80) of the polyphase stator winding system (74) of the synchronous generator (4) with permanent magnet excitation is connected electrically in series with one braking resistance (36) in the polyphase braking resistance arrangement, and **in that** the switching apparatus (32) has a short-circuiter which is connected electrically in parallel with this braking resistance (36).

6. Diesel-electric drive system according to Claim 1, **characterized in that** one winding (78, 80, 82) of the polyphase stator winding system (74) of the synchronous generator (4) with permanent magnet excitation is in each case connected electrically in series with one braking resistance (34, 36, 38) in the polyphase braking resistance arrangement, and **in that** a polyphase circuit breaker (40) is connected electrically in parallel with these braking resistances (34, 36, 38).

7. Diesel-electric drive system according to Claim 2, **characterized in that** the braking resistances (34, 36, 38) in the polyphase braking resistance arrangement are connected electrically in star.

8. Diesel-electric drive system according to Claim 2, **characterized in that** the braking resistances (34, 36, 38) in the polyphase braking resistance arrangement are connected electrically in series.

## Revendications

1. Système d'entraînement diesel électrique comprenant un générateur ( 4 ) synchrone à excitation permanente qui est couplé mécaniquement du côté du rotor à un moteur ( 2 ) diesel et qui est relié du côté du stator à un convertisseur ( 6 ) à circuit intermédiaire de tension, qui a du côté du générateur et du côté de la charge respectivement un convertisseur ( 12, 14 ) de courant à impulsion à commutation automatique, qui du côté tension continue sont combinés entre eux au moyen d'un circuit ( 18 ) intermédiaire de tension continue, et comprenant une résistance de frein, **caractérisé en ce qu'**il est prévu comme résistance de frein un agencement de résistance de frein polyphasé et que cet agencement de résistance de frein polyphasé peut être commuté au moyen d'un dispositif ( 32 ) de commutation polyphasé électriquement en série avec le système ( 74 ) polyphasé d'enroulement statorique du générateur ( 4 ) synchrone à excitation permanente.

2. Système d'entraînement diesel électrique suivant la revendication 1, **caractérisé en ce que** respectivement un enroulement ( 78, 80, 82 ) du système ( 74 ) d'enroulement statorique polyphasé du générateur ( 4 ) synchrone à excitation permanente et une résistance ( 34, 36, 38 ) de frein de l'agencement de résistance de frein polyphasé peuvent être montés électriquement en série et **en ce que** le dispositif ( 32 ) de commutation polyphasé a deux séparateurs qui d'une part sont reliés respectivement par un point ( 86, 88 ) de liaison d'une résistance ( 34, 36 ) de frein à un enroulement ( 80, 82 ) du système ( 74 ) d'enroulement statorique polyphasé du générateur ( 4 ) synchrone à excitation permanente et d'autre part entre eux et **en ce que** ce point ( 90 ) commun de liaison des deux séparateurs est relié par un point ( 84 ) de liaison d'une résistance ( 38 ) de frein à un enroulement ( 78 ) du système ( 74 ) d'enroulement statorique polyphasé du générateur ( 4 ) synchrone à excitation permanente.

3. Système d'entraînement diesel électrique suivant la revendication 1, **caractérisé en ce que** respectivement un enroulement ( 78, 80, 82 ) du système ( 74 ) d'enroulement statorique polyphasé du générateur ( 4 ) synchrone à excitation permanente est monté électriquement en série avec une résistance ( 34, 36, 38 ) de frein de l'agencement de résistance de frein polyphasé et **en ce que** le dispositif ( 32 ) de commutation polyphasé comporte trois dispositifs de court-circuit qui sont montés respectivement électriquement en parallèle avec une résistance ( 34, 36, 38 ) de frein de l'agencement de résistance de frein triphasé.

4. Système d'entraînement diesel électrique suivant la revendication 1, **caractérisé en ce que** respectivement deux enroulements ( 78, 80, 82 ) du système ( 74 ) d'enroulement statorique polyphasé du générateur ( 4 ) synchrone à excitation permanente sont montés électriquement en série avec une résistance ( 34, 36, 38 ) de frein de l'agencement de résistance de frein polyphasé et **en ce que** le dispositif ( 32 ) de commutation polyphasé a deux dispositifs de court-circuit qui sont montés électriquement en parallèle avec une résistance ( 34, 36, 38 ) de frein de l'agencement de résistance de frein triphasé.

5. Système d'entraînement diesel électrique suivant la revendication 1, **caractérisé en ce qu'**un enroulement ( 80 ) du système ( 74 ) d'enroulement statorique polyphasé du générateur ( 4 ) synchrone à excitation permanente est monté électriquement en série avec une résistance ( 36 ) de frein de l'agencement de résistance de frein polyphasé et **en ce que** le dispositif ( 32 ) de commutation comporte un dispositif de court-circuit qui est monté électriquement en parallèle avec cette résistance ( 36 ) de frein.

6. Système d'entraînement diesel électrique suivant la revendication 1, **caractérisé en ce que** respectivement un enroulement (78, 80, 82 ) du système ( 74 ) d'enroulement statorique polyphasé du générateur ( 4 ) synchrone à excitation permanente est monté électriquement en série avec une résistance ( 34, 36, 38 ) de frein de l'agencement de résistance de frein polyphasé et **en ce qu'**un disjoncteur ( 40 ) polyphasé est monté électriquement en parallèle avec ces résistances ( 34, 36, 38 ) de frein.

7. Système d'entraînement diesel électrique suivant la revendication 2, **caractérisé en ce que** les résistances ( 34, 36, 38 ) de frein de l'agencement de résistance de frein polyphasé sont montées en étoile.

8. Système d'entraînement diesel électrique suivant la revendication 2, **caractérisé en ce que** les résistances ( 34, 36, 38 ) de frein de l'agencement de résistance de frein polyphasé sont montées électriquement en série.
